# EUROPÄISCHE PATENTSCHRIFT

(11) **EP 2 840 000 B1**
(45) Veröffentlichungstag und Bekanntmachung des Hinweises auf die Patenterteilung: **12.02.2020**
(21) Anmeldenummer: 14002408.4
(22) Anmeldetag: 12.07.2014
(51) Int. Cl.: B60W 10/04, B60W 10/10, B60W 10/18, G05D 1/00, B60W 50/12

(54) **VERFAHREN FÜR DEN BETRIEB EINES FAHRERASSISTENZSYSTEMS UND ZUGEHÖRIGES KRAFTFAHRZEUG**
Method for operating a driver assistance system and corresponding motor vehicle
Procédé de fonctionnement d'un système d'assistance du conducteur et véhicule automobile associé

(30) Priorität: 31.07.2013 DE 102013012750
(43) Veröffentlichungstag der Anmeldung: 25.02.2015
(73) Patentinhaber: AUDI AG, 85045 Ingolstadt (DE)
(72) Erfinder: Reichel, Michael, 85049 Ingolstadt (DE); Klaas, Sebastian, 85101 Lenting (DE); Giesler, Björn, 85080 Gaimersheim (DE)
(74) Vertreter: Thielmann, Frank

(56) Entgegenhaltungen:
- DE-A1-102004 022 581
- DE-A1-102006 006 995
- DE-A1-102008 035 217
- DE-A1-102009 048 954

## Beschreibung

Die Erfindung betrifft ein Verfahren den Betrieb eines Fahrerassistenzsystems, das zum automatischen Fahren durch Eingreifen in die Motorsteuerung, ein Getriebe und eine Bremsanlage eines Kraftfahrzeugs ausgebildet ist.

Es sind bereits Fahrzeuge vorgeschlagen worden, die in der Lage sind, autonom ohne Eingriff oder Überwachung eines Fahrers zu fahren. Dazu ist eine Steuerung erforderlich, die bestimmte Funktionen übernimmt, die normalerweise vom Fahrer ausgeführt werden. Beispiele dafür sind die Steuerung des Motors, die Steuerung eines (automatischen) Getriebes sowie die Betätigung einer Bremsanlage. Im Rahmen des autonomen Fahrens werden von der Steuerung weitere Funktionen übernommen wie das Betätigen der Fahrtrichtungsanzeiger (Blinker), die Erfassung des Fahrwegs, die Navigation zu einem Ziel sowie die Erfassung des Fahrzeugumfelds, insbesondere die Erfassung anderer Verkehrsteilnehmer.

Ein Fahrzeug, bei dem ein derartiger Autopilot implementiert ist, kann vollkommen autonom, ohne Eingriff oder Überwachung durch einen Fahrer, betrieben werden. Während der Fahrt kann sich der Fahrer daher anderen Tätigkeiten widmen oder sogar schlafen.

In der DE 42 26 747 C1 ist ein Fahrzeug mit einem Autopiloten vorgeschlagen worden, bei dem nach dem Einschalten des Autopiloten der Sitz ausgehend von einer normalen Stellung in eine Arbeitsposition verschwenkt werden kann, so dass der Fahrer während des pilotierten Fahrens wie an einem Schreibtisch Tätigkeiten ausführen kann.

In der DE 10 2006 006 995 A1 ist ein Fahrzeug mit einem Autopiloten vorgeschlagen worden, bei dem das Lenkrad in Abhängigkeit des Betriebszustands des Autopilot-Systems automatisch verstellt wird.

Der Erfindung liegt die Aufgabe zugrunde, ein Verfahren für den Betrieb eines Fahrerassistenzsystems anzugeben, das einem Fahrer während des pilotierten Fahrens eine bequeme Ruhe- oder Schlafpause ermöglicht, ohne dabei die Fahrsicherheit zu beeinträchtigen.

Zur Lösung dieser Aufgabe ist bei einem Verfahren der eingangs genannten Art erfindungsgemäß vorgesehen, dass durch den Fahrer ein Schlafmodus aktiviert wird, in dem wenigstens das Lenkrad eingezogen oder in eine Ruhestellung bewegt wird, so dass es eine bequeme Ruhe- oder Schlafpause des Fahrers ermöglicht, wobei das Lenkrad im Schlafmodus deaktiviert wird.

Die Erfindung beruht auf der Idee, dass das Einlegen einer Ruhe- oder Schlafpause in einem Fahrzeug aus verschiedenen Gründen unbequem und nur mit Schwierigkeiten möglich ist. Daher kann erfindungsgemäß ein Schlafmodus aktiviert werden, in dem Beeinträchtigungen des Fahrers vermieden und die Bequemlichkeit für den Fahrer sowie die Fahrsicherheit erhöht ist.

Eine Variante des erfindungsgemäßen Verfahrens kann vorsehen, dass wenigstens eine, vorzugsweise mehrere oder alle Lichtquellen im Fahrzeuginnenraum gedimmt oder ausgeschaltet werden. Dadurch wird eine Beeinträchtigung des Fahrers durch Lichtquellen vermieden, so dass er während der Ruhe- oder Schlafpause ungestört ist.

Eine andere Variante des erfindungsgemäßen Verfahrens kann vorsehen, dass ein Kombiinstrument und/oder ein Bildschirm gedimmt oder ausgeschaltet wird bzw. werden. Dabei kann es sich z. B. um einen Bildschirm eines Multi Media Interface (MMI) oder um einen Bildschirm eines Navigationsgeräts handeln. Im eingeschalteten Zustand ziehen diese Geräte zwangsläufig die Aufmerksamkeit des Fahrers auf sich, so dass eine Ruhe- oder Entspannungsphase unterbrochen wird.

Eine noch bessere Abschirmung des Fahrers vor externen Störquellen ergibt sich, wenn an einem Mobilkommunikationsgerät eingehende Anrufe abgewiesen werden. Auf diese Weise wird verhindert, dass der Fahrer durch akustische Signale während der Ruhe- oder Schlafpause gestört wird. Andererseits kann es optional vorgesehen sein, dass bei mehrfachen Anrufen desselben Anrufers innerhalb eines bestimmten Zeitraums der Anruf signalisiert oder entgegengenommen wird. In diesen Fällen ist davon auszugehen, dass es sich um wichtige Anrufe handelt, daher werden diese Anrufe nicht unterdrückt.

Um die Bequemlichkeit für den Fahrer weiter zu erhöhen, kann es bei dem erfindungsgemäßen Verfahren vorgesehen sein, dass der Fahrersitz und/oder das Lenkrad in eine für den Fahrer bequemere Position verstellt werden. Beispielsweise kann die Sitzlehne nach hinten verfahren werden, diese flachere oder schrägere Lage eignet sich besser für eine Ruhe- oder Schlafphase. In ähnlicher Weise kann auch das Lenkrad in eine für den Fahrer weniger störende Position verstellt werden, z. B. kann es vom Fahrer weg zum Instrumentenbrett hin verschoben werden. Es ist auch denkbar, das Lenkrad in eine höhere Position zu verfahren, so dass der Abstand zwischen dem Lenkrad und den Oberschenkeln des Fahrers vergrößert wird, so dass sich die Bewegungsfreiheit des Fahrers vergrößert.

Das erfindungsgemäße Verfahren kann auch vorsehen, dass die Lautstärke eines Medienwiedergabegeräts verringert und/oder dass die Auswahl abgespielter Mediendateien geändert wird. Der Fahrer kann beispielsweise spezielle Mediendateien auswählen, die in dem Schlafmodus abgespielt werden. Andererseits kann es vorgesehen sein, dass im Schlafmodus die Wiedergabe von Mediendateien gestoppt wird, um jegliche Beeinträchtigung des Fahrers zu vermeiden.

Eine Weiterbildung des erfindungsgemäßen Verfahrens kann vorsehen, dass ein Fahrwerk oder ein aktives Fahrwerk des Fahrzeugs so gesteuert wird, dass das Fahrzeug ohne Nick- und/oder Wankbewegungen bewegt wird. Bei aktiviertem Schlafmodus werden somit positive oder negative Beschleunigungen möglichst vermieden, die üblicherweise auftreten, insbesondere wenn ein aktives Fahrwerk in einem Sportmodus betrieben wird. Bei aktiviertem Schlafmodus wird das Fahrzeug mittels des aktiven Fahrwerks hingegen so gesteuert, dass derartige Bewegungen mit geringer Beschleunigung erfolgen, die vom Fahrer praktisch nicht bemerkt werden.

Es liegt auch im Rahmen der Erfindung, dass im Schlafmodus die Pedale eingezogen oder in eine Ruhestellung bewegt werden. Durch das Verstellen der Pedale werden die Bewegungsmöglichkeiten für den Fahrer im Fußraum erweitert, so dass er seine Füße in eine bequeme Position bringen kann.

Um die Sicherheit des pilotierten Fahrens im Schlafmodus zu erhöhen, kann es vorgesehen sein, dass wenigstens ein Bedienelement deaktiviert wird. Der Begriff "Bedienelement" umfasst dabei jegliche Schalter, Taster, Dreh- oder Drücksteller sowie Hebel, die sich im Griffbereich des Fahrers befinden. Durch die Aktivierung dieser Bedienelemente wird eine zufällige, nicht gewünschte Aktivierung vermieden. In diesem Zusammenhang wird erfindungsgemäß das Lenkrad deaktiviert, so dass keine unbeabsichtigten Lenkbewegungen des Fahrers durchgeführt werden können. Dasselbe gilt für an dem Lenkrad vorhandene Schalter oder Taster, die ebenfalls deaktiviert werden. Schließlich können im Schlafmodus auch die Pedale deaktiviert werden, so dass eine zufällige Betätigung der Pedale ohne Folgen bleibt.

Zur Erhöhung der Sicherheit des Fahrers können im Schlafmodus die Fahrzeugtüren verriegelt werden. Diese Maßnahme verhindert, dass z. B. bei einem Ampelstopp Dritte das Fahrzeug von außen öffnen können.

Bei dem erfindungsgemäßen Verfahren kann es auch vorgesehen sein, dass die Außenrückblickspiegel im Schlafmodus eingeklappt werden. Durch das Einklappen der Außenrückblickspiegel verringert sich der aerodynamische Widerstand des Kraftfahrzeugs, was in einem geringeren Kraftstoffverbrauch resultiert.

In bestimmten Fällen kann es erforderlich sein, dass der Fahrer eingreifen muss, ebenso sind Situationen denkbar, die eine Wahrnehmung des Fahrers erfordern. In diesen Fällen kann bei dem erfindungsgemäßen Verfahren ein Aufweckverfahren ausgelöst werden, mit dem Ziel, ein Wachwerden und ein schnelles Verstehen der Situation durch den Fahrer zu bewirken.

Daneben betrifft die Erfindung ein Kraftfahrzeug mit einem Fahrerassistenzsystem, das zum automatischen Fahren durch Eingreifen in die Motorsteuerung, ein Getriebe und eine Bremsanlage ausgebildet ist. Das erfindungsgemäße Kraftfahrzeug ist zur Durchführung des beschriebenen Verfahrens geeignet.

Die Erfindung wird nachfolgend anhand eines Ausführungsbeispiels unter Bezugnahme auf die Zeichnungen erläutert. Die Zeichnungen sind schematische Darstellungen und zeigen:
- Fig. 1: ein Kraftfahrzeug mit einem Fahrerassistenzsystem, das zum automatischen Fahren ausgebildet ist und bei dem ein Schlafmodus durch einen Fahrer aktiviert werden kann; und
- Fig. 2: das in Fig. 1 gezeigte Kraftfahrzeug bei aktiviertem Schlafmodus.

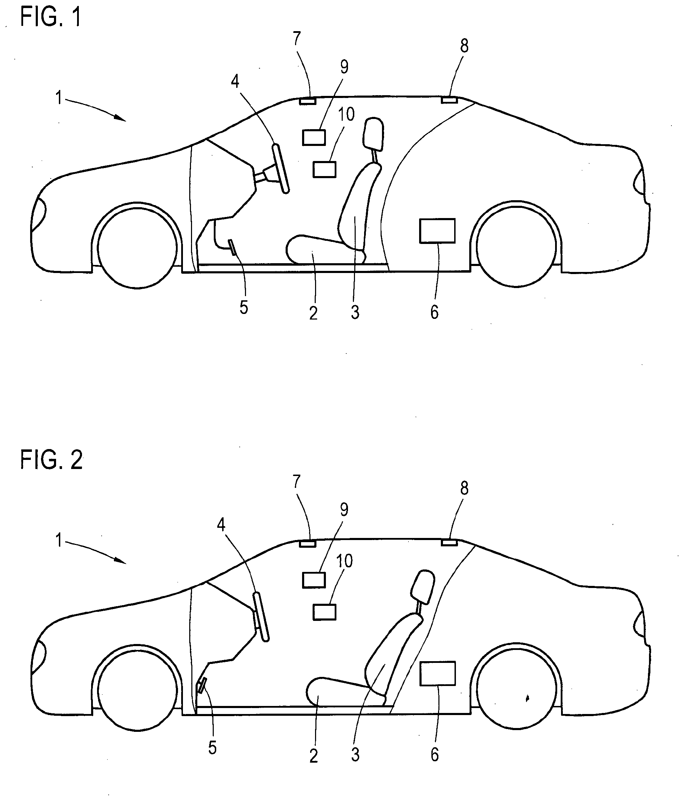

Fig. 1 zeigt das Kraftfahrzeug 1 bei nicht aktiviertem Schlafmodus. In diesem Zustand befinden sich die verschiedenen Komponenten des Fahrzeuginnenraums und die Bedienelemente an ihrer normalen Position. Ein Fahrzeugsitz 2 mit einer Rückenlehne 3 befindet sich in einer normalen Stellung. Dasselbe gilt für ein Lenkrad 4. Die Pedale 5 befinden sich ebenfalls in ihrer normalen Position.

Das Kraftfahrzeug 1 umfasst ein Fahrerassistenzsystem mit einer Steuerungseinrichtung 6, das ein autonomes Fahren des Kraftfahrzeugs 1, ohne Überwachung oder Bedieneingriffe durch einen Fahrer ermöglicht. Die Steuerungseinrichtung 6 ist dazu ausgebildet, in eine Motorsteuerung und eine Getriebesteuerung einzugreifen sowie gegebenenfalls die Bremsanlage des Kraftfahrzeugs 1 zu betätigen. Dementsprechend werden die für die Steuerung des Kraftfahrzeugs erforderlichen Bedienkommandos von der Steuerungseinrichtung 6 vorgenommen. Im Rahmen des autonomen Fahrens wird das Umfeld des Kraftfahrzeugs 1 durch mehrere Kameras 7, 8 überwacht, so dass sich das Kraftfahrzeug 1 sicher im Verkehr bewegen kann. Das Kraftfahrzeug ist somit in der Lage, in komplexen Szenarien vollautomatisch zu fahren. Der Fahrer wird dadurch zum Passagier und kann sich während der Fahrt anderen Tätigkeiten widmen, z. B. eine Ruhepause oder eine Schlafpause einlegen.

In dem Fahrerassistenzsystem ist ein Schlafmodus implementiert. Nach dem Aktivieren des Schlafmodus durch den Fahrer werden Fahrzeugkomponenten so gesteuert, dass sie eine bequeme Ruhe- oder Schlafpause des Fahrers ermöglichen.

Fig. 2 zeigt das Kraftfahrzeug 1 bei aktiviertem Schlafmodus. Der Fahrzeugsitz ist in eine für den Fahrer bequemere hintere Stellung verschoben. Die Rückenlehne 3 ist in eine bequemere geneigte Position verschoben. Das Lenkrad 4 befindet sich im Schlafmodus in einer eingezogenen Position, wodurch der dem Fahrer zur Verfügung stehende Raum vergrößert wird. Die Pedale 5 sind im Schlafmodus deaktiviert, so dass eine versehentliche Betätigung eines Pedals durch den Fahrer nicht die normale Aktion auslöst. Zusätzlich sind die Pedale 5 eingezogen, wie in Fig. 2 dargestellt ist. Auf diese Weise wird es dem Fahrer erleichtert, eine bequeme Haltung einzunehmen. Im Schlafmodus werden sämtliche Lichtquellen im Fahrzeuginnenraum ausgeschaltet, so dass der Fahrer dadurch nicht beeinträchtigt wird. Dasselbe gilt für das Kombiinstrument und den Bildschirm eines Multi Media Interface.

Zusätzlich werden die Fahrzeugtüren verriegelt, um ein Öffnen durch Dritte bei stillstehendem Fahrzeug, z. B. bei einem Ampelhalt, zu verhindern.

Mittels der Steuerungseinrichtung 6 wird auch ein aktives Fahrwerk gesteuert, das im Schlafmodus Nick- und Wankbewegungen des Kraftfahrzeugs 1 unterdrückt. Das aktive Fahrwerk steuert das Fahrzeug im Schlafmodus so, dass der Fahrer möglichst geringen Beschleunigungen ausgesetzt ist.

Im Fahrzeuginneren werden die dort vorhandenen Bedienelemente wie Schalter, Taster, Drehknöpfe, Hebel und dergleichen deaktiviert, so dass der Fahrer keine unbeabsichtigten Aktionen auslösen kann.

Ein in dem Kraftfahrzeug 1 eingebautes oder damit gekoppeltes Mobilkommunikationsgerät 9 weist im Schlafmodus ankommende Anrufe ab, um Störungen des Fahrers zu vermeiden. Die Lautstärke eines Medienwiedergabegeräts 10 wird im Schlafmodus verringert, auf Wunsch des Fahrers kann das Gerät auch ausgeschaltet werden.

Als weitere Maßnahme werden bei aktiviertem Schlafmodus die Außenrückblickspiegel eingeklappt, um den Strömungswiderstand des Fahrzeugs zu verringern.

In besonderen Situationen kann es erforderlich sein, den Fahrer aufzuwecken, ihn zu informieren oder ihn dazu aufzufordern, die Führung des Fahrzeugs zu übernehmen. In derartigen Situationen wird ein Aufweckverfahren ausgelöst, bei dem der Fahrer durch ein akustisches Signal geweckt wird. Dieses akustische Signal kann z. B. durch Vibrationen unterstützt werden, die von dem Fahrersitz 2 erzeugt werden. Durch dieses Aufweckverfahren soll ein schnelles Aufwachen und Verstehen der Situation durch den Fahrer gefördert werden.

## Patentansprüche

1. Verfahren für den Betrieb eines Fahrerassistenzsystems, das zum automatischen Fahren durch Eingreifen in die Motorsteuerung, in ein Getriebe und eine Bremsanlage eines Kraftfahrzeugs ausgebildet ist, wobei durch einen Fahrer ein Schlafmodus aktiviert wird, in dem wenigstens das Lenkrad eingezogen oder in eine Ruhestellung bewegt wird, so dass es eine bequeme Ruhe- oder Schlafpause des Fahrers ermöglicht,
**dadurch gekennzeichnet,**
**dass** das Lenkrad im Schlafmodus deaktiviert wird.

2. Verfahren nach Anspruch 1,
**dadurch gekennzeichnet,**
**dass** wenigstens eine, vorzugsweise mehrere oder alle Lichtquellen im Fahrzeuginnenraum gedimmt oder ausgeschaltet werden.

3. Verfahren nach Anspruch 1 oder 2,
**dadurch gekennzeichnet,**
**dass** ein Kombiinstrument und/oder ein Bildschirm gedimmt oder ausgeschaltet wird bzw. werden.

4. Verfahren nach einem der vorangehenden Ansprüche,
**dadurch gekennzeichnet,**
**dass** an einem Mobilkommunikationsgerät eingehende Anrufe abgewiesen werden.

5. Verfahren nach Anspruch 4,
**dadurch gekennzeichnet,**
**dass** bei mehrfachen Anrufen desselben Anrufers innerhalb eines bestimmten Zeitraums der Anruf entgegengenommen wird.

6. Verfahren nach einem der vorangehenden Ansprüche,
**dadurch gekennzeichnet,**
**dass** der Fahrersitz und/oder das Lenkrad in eine für den Fahrer bequemere Position verstellt werden.

7. Verfahren nach einem der vorangehenden Ansprüche,
**dadurch gekennzeichnet,**
**dass** die Lautstärke eines Medienwiedergabegeräts verringert und/oder die Auswahl abgespielter Mediendateien geändert wird.

8. Verfahren nach einem der vorangehenden Ansprüche,
**dadurch gekennzeichnet,**
**dass** ein Fahrwerk oder ein aktives Fahrwerk so gesteuert wird, dass das Fahrzeug ohne Nick- und/oder Wankbewegungen bewegt wird.

9. Verfahren nach einem der vorangehenden Ansprüche,
**dadurch gekennzeichnet,**
**dass** die Pedale eingezogen oder in eine Ruhestellung bewegt werden.

10. Verfahren nach einem der vorangehenden Ansprüche,
**dadurch gekennzeichnet,**
**dass** wenigstens ein Bedienelement deaktiviert wird.

11. Verfahren nach Anspruch 10,
**dadurch gekennzeichnet,**
**dass** die Pedale deaktiviert werden.

12. Verfahren nach einem der vorangehenden Ansprüche,
**dadurch gekennzeichnet,**
**dass** die Fahrzeugtüren verriegelt werden.

13. Verfahren nach einem der vorangehenden Ansprüche,
**dadurch gekennzeichnet,**
**dass** die Außenrückblickspiegel eingeklappt werden.

14. Verfahren nach einem der vorangehenden Ansprüche,
**dadurch gekennzeichnet,**
**dass** bei einem erforderlichen Eingreifen des Fahrers ein Aufweckverfahren ausgelöst wird.

15. Kraftfahrzeug, mit einem Fahrerassistenzsystem, das zum automatischen Fahren durch Eingreifen in die Motorsteuerung, in ein Getriebe und eine Bremsanlage eines Kraftfahrzeugs ausgebildet ist,
**dadurch gekennzeichnet,**
**dass** es ein Verfahren nach einem der Ansprüche 1 bis 14 ausführt.

## Claims

1. Method for the operation of a driver assistance system which is formed for automatic driving by engaging with the engine control, with a gearbox and a braking system of a motor vehicle, wherein a sleep mode is activated by a driver in which at least the steering wheel is retracted or moved into a rest position such that it enables a comfortable rest or sleep break of the driver,
**characterised in**
**that** the steering wheel is deactivated in sleep mode.

2. Method according to claim 1,
**characterised in**
**that** at least one, preferably several or all light sources in the vehicle interior are dimmed or switched off.

3. Method according to claim 1 or 2,
**characterised in**
**that** an instrument cluster and/or a screen is or are dimmed or switched off.

4. Method according to any one of the preceding claims,
**characterised in**
**that** calls incoming to a mobile communication device are rejected.

5. Method according to claim 4,
**characterised in**
**that** in the case of multiple calls from the same caller within a determined period of time, the call is accepted.

6. Method according to any one of the preceding claims,
**characterised in**
**that** the driver's seat and/or the steering wheel are adjusted into a position which is more comfortable for the driver.

7. Method according to any one of the preceding claims,
**characterised in**
**that** the volume of a media player is reduced and/or the selection of played media files is changed.

8. Method according to any one of the preceding claims,
**characterised in**
**that** a chassis or an active chassis is controlled such that the vehicle is moved without pitching and/or rolling movements.

9. Method according to any one of the preceding claims,
**characterised in**
**that** the pedals are retracted or moved into a rest position.

10. Method according to any one of the preceding claims,
**characterised in**
**that** at least one operating element is deactivated.

11. Method according to claim 10,
**characterised in**
**that** the pedals are deactivated.

12. Method according to any one of the preceding claims,
**characterised in**
**that** the vehicle doors are locked.

13. Method according to any one of the preceding claims,
**characterised in**
**that** the exterior rear-view mirrors are folded in.

14. Method according to any one of the preceding claims,
**characterised in**
**that**, in the case of a required engagement of the driver, a rousing method is triggered.

15. Motor vehicle, having a driver assistance system, which is formed for automatic driving by engaging with the engine control, with a gearbox and a braking system of a motor vehicle,
**characterised in**
**that** it implements a method according to any one of claims 1 to 14.

## Revendications

1. Procédé pour le fonctionnement d'un système d'assistance au conducteur qui est réalisé pour la conduite automatique par intervention dans la commande de moteur, dans une transmission et dans une installation de freinage d'un véhicule automobile, dans lequel un mode de veille est activé par un conducteur, dans lequel au moins le volant est rentré ou est déplacé dans une position de repos de sorte qu'il permette une pause de repos ou de veille confortable du conducteur,
**caractérisé en ce**
**que** le volant est désactivé dans le mode de veille.

2. Procédé selon la revendication 1,
**caractérisé en ce**
**qu'**au moins une, de préférence plusieurs ou toutes les sources de lumière sont atténuées ou éteintes dans l'habitacle de véhicule.

3. Procédé selon la revendication 1 ou 2,
**caractérisé en ce**
**qu'**un tableau de bord et/ou un écran est ou sont atténués ou éteints.

4. Procédé selon l'une des revendications précédentes,
**caractérisé en ce**
**que** des appels entrants au niveau d'un appareil de communication mobile sont rejetés.

5. Procédé selon la revendication 4,
**caractérisé en ce**
**qu'**en cas d'appels multiples du même appelant dans une période déterminée l'appel est pris.

6. Procédé selon l'une des revendications précédentes,
**caractérisé en ce**
**que** le siège de conducteur et/ou le volant sont réglés dans une position plus confortable pour le conducteur.

7. Procédé selon l'une des revendications précédentes,
**caractérisé en ce**
**que** le volume sonore d'un lecteur multimédia est réduit et/ou la sélection de fichiers multimédia joués est modifiée.

8. Procédé selon l'une des revendications précédentes,
**caractérisé en ce**
**qu'**un mécanisme de roulement ou un mécanisme de roulement actif est commandé de sorte que le véhicule soit déplacé sans mouvement de tangage et/ou de roulis.

9. Procédé selon l'une des revendications précédentes,
**caractérisé en ce**
**que** les pédales sont rentrées ou déplacées dans une position de repos.

10. Procédé selon l'une des revendications précédentes,
**caractérisé en ce**
**qu'**au moins un élément de commande est désactivé.

11. Procédé selon la revendication 10,
**caractérisé en ce**
**que** les pédales sont désactivées.

12. Procédé selon l'une des revendications précédentes,
**caractérisé en ce**
**que** les portes de véhicule sont verrouillées.

13. Procédé selon l'une des revendications précédentes,
**caractérisé en ce**
**que** les rétroviseurs extérieurs sont rabattus.

14. Procédé selon l'une des revendications précédentes,
**caractérisé en ce**
**qu'**en cas d'intervention nécessaire du conducteur une procédure de réveil est déclenchée.

15. Véhicule automobile, avec un système d'assistance au conducteur, qui est réalisé pour la conduite automatique par intervention dans la commande de moteur, dans une transmission et dans une installation de freinage d'un véhicule automobile,
**caractérisé en ce**
**qu'**il réalise un procédé selon l'une des revendications 1 à 14.
